# DEMANDE DE BREVET EUROPEEN

(11) **EP 2 463 986 A1**
(43) Date de publication de la demande: **13.06.2012**
(21) Numéro de dépôt: 10290647.6
(22) Date de dépôt: 10.12.2010
(51) Int. Cl.: H02J 7/32, H02K 7/18

(54) **Appareil électronique portable**

(71) Demandeur: CELSIUS X VI II, 75011 Paris (FR)
(72) Inventeur: Andre, Jean-Marie, 73100 Aix-les-Bains (FR); Mahiou, Pierre, 75010 Paris (FR)
(74) Mandataire: Micheli & Cie SA

(57) **Abrégé**

L'appareil électronique portable comprend des première et deuxième parties (2, 3) mobiles l'une par rapport à l'autre, une source d'énergie rechargeable (9), au moins un générateur électrique (22 ; 72, 84) pour recharger la source d'énergie (9) et un mécanisme (17) pour actionner le ou les générateurs électriques (22 ; 72, 84) en utilisant l'énergie produite par des mouvements relatifs des première et deuxième parties (2, 3). Ledit mécanisme (17) comprend :
- un premier accumulateur d'énergie à ressort (20 ; 60) pour emmagasiner ladite énergie produite par les mouvements relatifs,
- un deuxième accumulateur d'énergie à ressort (21 ; 74), et
- des moyens (8, 51-53, 19 ; 66, 77) pour successivement
a) libérer de l'énergie emmagasinée dans le premier accumulateur d'énergie à ressort (20 ; 60) et la fournir en partie au générateur électrique (22) ou à un premier (72) des générateurs électriques (72, 84) et en partie au deuxième accumulateur d'énergie à ressort (21 ; 74), et
b) libérer de l'énergie emmagasinée dans le deuxième accumulateur d'énergie à ressort (21 ; 74) et la fournir, en partie au moins, au générateur électrique (22) ou à un deuxième (84) des générateurs électriques (72, 84).

## Description

La présente invention concerne un appareil électronique portable, en particulier un téléphone portable, comprenant une source d'énergie, telle qu'un accumulateur, une batterie, un condensateur, etc., rechargeable manuellement.

La source d'énergie d'un appareil électronique portable est normalement rechargeable électriquement, c'est-à-dire en branchant l'appareil au secteur par l'intermédiaire d'un transformateur.

Il a toutefois été proposé, dans les documents DE 32 11 114, EP 0 409 819, GB 2 347 800 et US 2004/0204180, des appareils électroniques portables dont la source d'énergie peut être rechargée manuellement. Ces appareils comportent un organe d'actionnement manuel, tel qu'une manivelle, une roue, un levier ou un poussoir, faisant saillie sur une face extérieure de l'appareil et permettant à l'utilisateur d'entraîner en rotation le rotor d'un générateur électrique relié électriquement à la source d'énergie.

Un inconvénient de ces appareils est qu'ils nécessitent un organe d'actionnement manuel spécifique, accessible depuis l'extérieur de l'appareil, et qui peut donc nuire à l'esthétique de l'appareil. Un autre inconvénient est qu'ils nécessitent une action spécifique de l'utilisateur pour recharger la source d'énergie.

Par ailleurs, il a été proposé dans le document GB 2 399 984 un appareil de communication portable en deux parties articulées l'une à l'autre par une charnière et comprenant dans ladite charnière un générateur électrique actionné par les mouvements relatifs des deux parties articulées. Le courant produit par le générateur électrique pendant lesdits mouvements est fourni à la source d'énergie de l'appareil pour la recharger.

L'avantage de cet appareil est qu'il utilise l'énergie cinétique générée par des actions manuelles d'utilisation normale de l'appareil, à savoir son ouverture et sa fermeture, pour produire de l'électricité et recharger la source d'énergie. Aucun organe d'actionnement spécifique accessible à l'utilisateur n'est nécessaire, de sorte que l'appareil peut avoir une apparence normale.

Par contre, cet appareil présente l'inconvénient d'avoir un faible taux de rendement en terme de recharge de la source d'énergie. En effet le générateur électrique n'est actionné que pendant les mouvements relatifs des deux parties articulées. Or on sait que le rendement de charge d'une source d'énergie dépend plus de la durée de charge que de l'intensité du courant produit par le générateur électrique, le courant de charge étant de toute manière écrêté à une valeur constante.

La présente invention vise à proposer un appareil électronique portable à dispositif de recharge manuelle de la source d'énergie, qui permette d'augmenter le rendement de la recharge.

A cette fin, il est prévu un appareil électronique portable, en particulier un téléphone portable, comprenant des première et deuxième parties mobiles l'une par rapport à l'autre, une source d'énergie rechargeable, au moins un générateur électrique pour recharger la source d'énergie et un mécanisme pour actionner le ou les générateurs électriques en utilisant l'énergie produite par des mouvements relatifs des première et deuxième parties, caractérisé en ce que ledit mécanisme comprend :
- un premier accumulateur d'énergie à ressort pour emmagasiner ladite énergie produite par les mouvements relatifs,
- un deuxième accumulateur d'énergie à ressort, et
- des moyens pour successivement
   a) libérer de l'énergie emmagasinée dans le premier accumulateur d'énergie à ressort et la fournir en partie au générateur électrique ou à un premier des générateurs électriques et en partie au deuxième accumulateur d'énergie à ressort, et
   b) libérer de l'énergie emmagasinée dans le deuxième accumulateur d'énergie à ressort et la fournir, en partie au moins, au générateur électrique ou à un deuxième des générateurs électriques.

Typiquement, lesdits moyens sont adaptés pour répéter la succession des étapes a) et b) jusqu'à ce que le premier accumulateur d'énergie à ressort soit sensiblement complètement déchargé.

De préférence, la force du deuxième accumulateur d'énergie à ressort, c'est-à-dire la raideur dudit ressort, est inférieure à la force du premier accumulateur d'énergie à ressort.

Dans un autre mode de réalisation, ledit mécanisme comprend en outre un troisième accumulateur d'énergie à ressort agencé pour recevoir en partie l'énergie libérée du deuxième accumulateur d'énergie à ressort, et lesdits moyens sont adaptés pour libérer de l'énergie emmagasinée dans ce troisième accumulateur d'énergie à ressort et la fournir, en partie au moins, audit deuxième des générateurs électriques.

De préférence, la force du troisième accumulateur d'énergie à ressort est inférieure à la force du deuxième accumulateur d'énergie à ressort.

Lesdits moyens comprennent typiquement des moyens d'embrayage pour sélectivement bloquer ou libérer les accumulateurs d'énergie à ressort.

Les accumulateurs d'énergie à ressort peuvent comprendre chacun un tambour logeant un ressort d'accumulation d'énergie en spirale.

Avantageusement, les première et deuxième parties mobiles comprennent chacune des éléments participant au fonctionnement normal de l'appareil, et ledit mécanisme, avec le ou les générateurs électriques, et la source d'énergie sont chacun situés dans l'une desdites première et deuxième parties mobiles.

Les première et deuxièmes parties mobiles peuvent être articulées l'une à l'autre par une charnière.

D'autres caractéristiques et avantages de la présente invention apparaîtront à la lecture de la description détaillée suivante faite en référence aux dessins annexés dans lesquels :
- la figure 1 est une vue de profil d'un téléphone portable selon un premier mode de réalisation de l'invention, en position ouverte ;
- la figure 2 est une vue de dessus du téléphone portable selon le premier mode de réalisation de l'invention, en position fermée, montrant à travers une zone transparente de la coque du téléphone un mécanisme de recharge manuelle de la batterie du téléphone ; sur cette figure 2, une partie centrale de la charnière du téléphone a été rendue transparente pour montrer une roue dentée située dans cette charnière ;
- la figure 3 est un schéma électrique du dispositif de recharge de la batterie du téléphone portable selon le premier mode de réalisation de l'invention ;
- la figure 4 est une vue en perspective d'une partie du mécanisme illustré à la figure 2 ; sur cette figure 4, une roue dentée située dans la charnière du téléphone portable a été rendue transparente pour montrer les parties situées derrière cette roue ;
- la figure 5 est une vue en perspective plus complète du mécanisme illustré à la figure 2 ;
- la figure 6 est une vue en perspective d'un mécanisme de détection de la tension d'un ressort de barillet utilisé dans le mécanisme de recharge de la batterie du téléphone portable selon l'invention ; et
- la figure 7 est une vue en perspective d'un mécanisme de recharge manuelle de la batterie d'un téléphone portable selon un second mode de réalisation de l'invention.

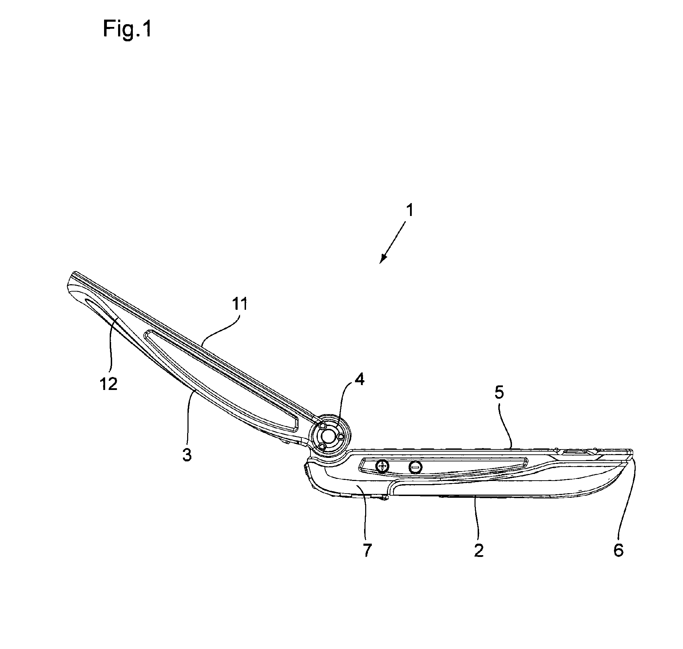

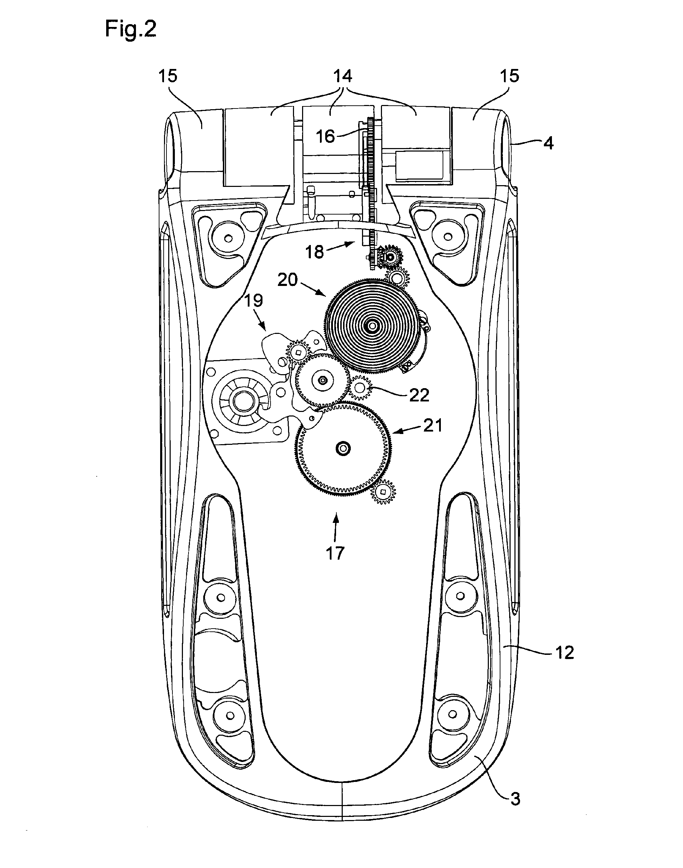

Un appareil électronique portable selon un premier mode de réalisation de l'invention est sous la forme d'un téléphone portable 1 tel que montré aux figures 1 à 3. Le téléphone 1 est en deux parties 2, 3 pivotant l'une par rapport à l'autre par l'intermédiaire d'une charnière 4. Chacune de ces deux parties 2, 3 comprend des éléments participant au fonctionnement normal du téléphone. Typiquement, la première partie 2, appelée « base » dans la suite, comprend un clavier sur sa face intérieure 5, un microphone sur sa face intérieure 5, sur son flanc d'extrémité 6 ou à l'intérieur de sa coque 7 et une carte électronique à l'intérieur de sa coque 7. La carte électronique comprend notamment le processeur 8 du téléphone, une batterie rechargeable 9 alimentant le téléphone en énergie électrique et un circuit 10 de gestion de charge de la batterie 9. La deuxième partie 3, appelée « clapet » dans la suite, comprend typiquement un écran et un écouteur sur sa face intérieure 11 et des circuits électroniques correspondants à l'intérieur de sa coque 12, ces circuits électroniques communiquant avec les circuits électroniques de la base 2 à travers la charnière 4. En position ouverte du téléphone (figure 1), la base 2 et le clapet 3 sont écartés angulairement l'un de l'autre, rendant accessible le clavier et l'écran. En position fermée du téléphone (figure 2), le clapet 3 est rabattu contre la base 2 et l'écran et le clavier ne sont pas accessibles.

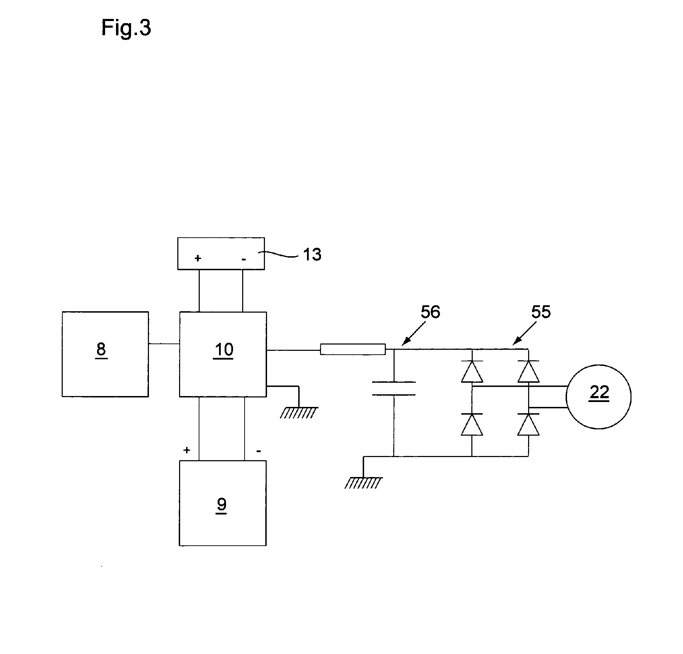

De manière classique, comme montré à la figure 3, la batterie 9 peut être rechargée en branchant le téléphone au secteur par l'intermédiaire d'un transformateur 13. Le circuit de gestion de charge 10 interconnecté entre le transformateur 13 et la batterie 9 détecte la présence du transformateur 13, fournit à la batterie 9 l'énergie électrique provenant du secteur et indique au processeur 8 le niveau de charge de la batterie 9.

Dans la présente invention, le téléphone est aussi rechargeable manuellement au moyen d'un mécanisme qui va maintenant être décrit.

Comme montré à la figure 2, la charnière 4 est définie par une partie centrale 14 solidaire de la base 2 et des parties latérales 15 solidaires du clapet 3. Une roue dentée 16 est montée dans la partie centrale 14 coaxialement à la charnière 4. Cette roue dentée 16 coopère avec un mécanisme 17 monté dans le clapet 3 et comprenant un train d'engrenages 18, un embrayage 19, des accumulateurs d'énergie à ressort primaire et secondaire 20, 21 et un générateur électrique 22. Dans l'exemple illustré, le mécanisme 17 est visible à travers une partie transparente de la coque 12 du clapet 3.

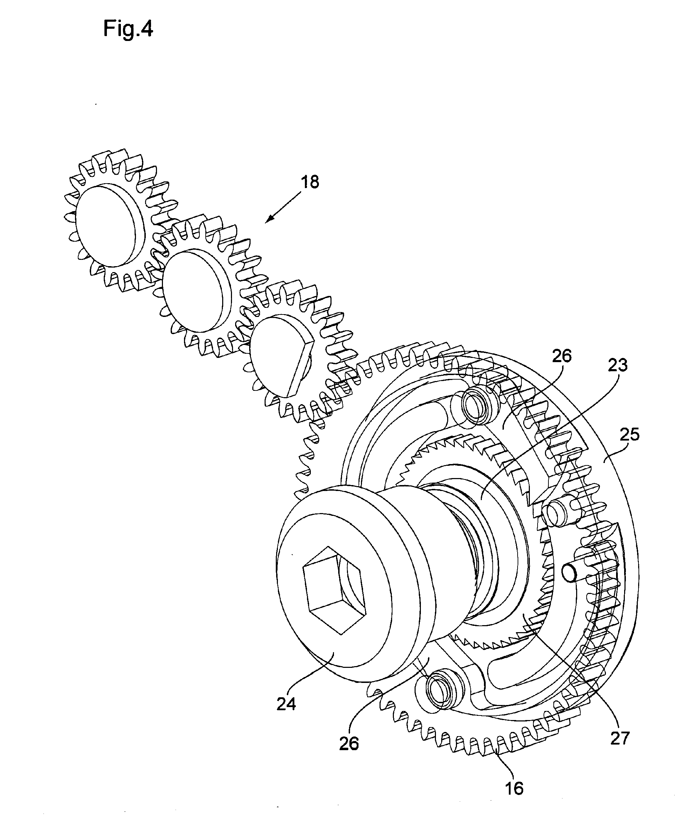

La figure 4 montre en détail la roue de charnière 16 et une partie du train d'engrenages 18. La roue de charnière 16 est montée libre en rotation autour d'un axe 23 solidaire de la base 2. Dans l'exemple illustré, l'axe 23 est constitué par une partie non filetée de la tige d'une vis 24 dont la partie filetée est vissée dans la partie centrale 14 de la charnière 4. La roue de charnière 16 est coaxiale et solidaire d'une plaque 25 portant des cliquets 26 qui coopèrent avec une roue à dents asymétriques 27 montée solidaire autour de l'axe 23. Lorsque l'on ouvre le téléphone, les cliquets 26 empêchent la roue de charnière 16 de tourner, la rendant ainsi solidaire de la base 2. Le train d'engrenages 18 monté dans le clapet 3 et coopérant avec la denture de la roue de charnière 16 se met alors à tourner pour remonter le mécanisme 17, plus précisément l'accumulateur d'énergie à ressort primaire 20. Lorsque l'on ferme le téléphone, le train d'engrenages 18 est bloqué, comme cela sera expliqué ci-dessous, mais les cliquets 26 autorisent une rotation de la roue de charnière 16 pour permettre à la charnière 4 de fonctionner.

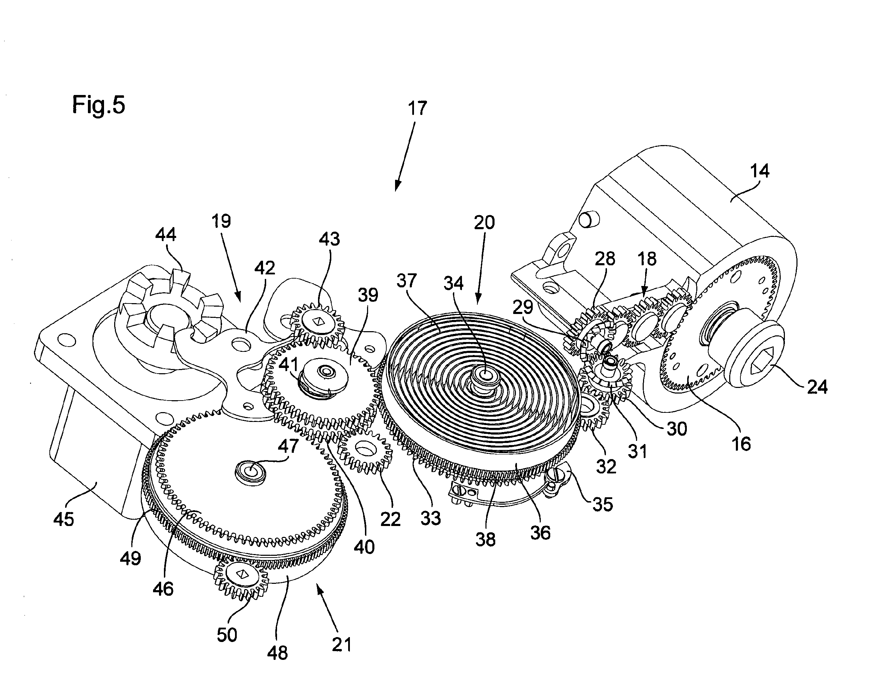

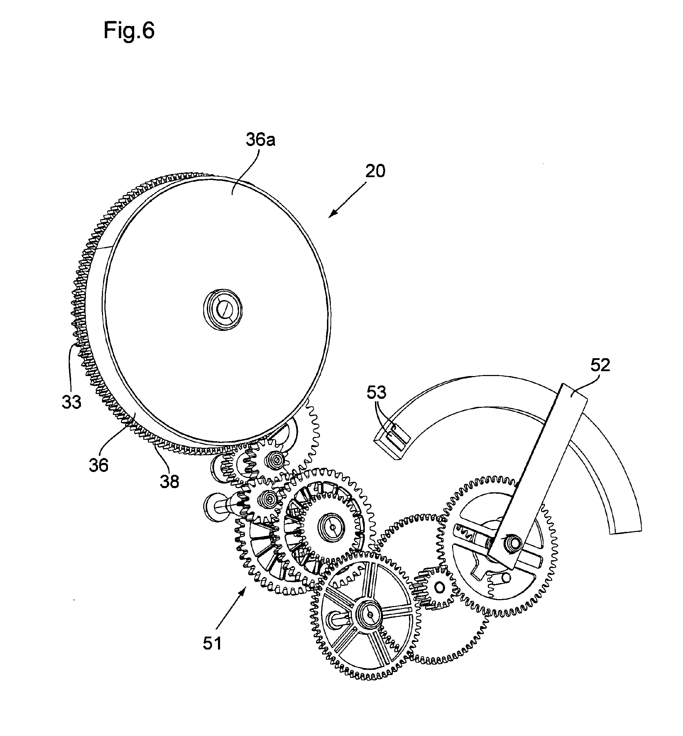

Comme montré à la figure 5, le train d'engrenages 18 comprend une série de pignons situés dans le plan de la roue de charnière 16, le dernier de ces pignons, 28, étant coaxial et solidaire d'un premier pignon à denture conique 29, et un pignon 30 situé dans un plan parallèle au plan du clapet 3, ce pignon 30 étant coaxial et solidaire d'un second pignon à denture conique 31 qui engrène avec le premier pignon à denture conique 29. Le pignon 30 engrène avec un pignon 32 qui lui-même engrène avec une roue de remontage primaire 33 montée solidaire autour d'un arbre de barillet primaire 34. Un cliquet 35 coopère avec la denture de la roue de remontage primaire 33 pour autoriser sa rotation dans un sens, correspondant à l'ouverture du téléphone, et empêcher sa rotation dans l'autre sens, correspondant à la fermeture du téléphone. Un tambour de barillet primaire 36 est monté libre en rotation autour de l'arbre de barillet primaire 34. Le tambour de barillet primaire 36 loge un ressort primaire d'accumulation d'énergie 37 en forme de spirale et présente une denture extérieure 38. Le ressort primaire 37 a son extrémité intérieure fixée à l'arbre de barillet primaire 34 et son extrémité extérieure reliée à la paroi intérieure du tambour de barillet primaire 36 par l'intermédiaire d'une bride glissante, comme cela est connu en horlogerie. L'ensemble 33, 34, 36, 37 forme l'accumulateur d'énergie à ressort primaire 20. Le tambour de barillet primaire 36 peut être fermé par un couvercle 36a, comme cela est représenté à la figure 6.

Par sa denture extérieure 38, le tambour de barillet primaire 36 engrène avec une roue supérieure 39 de l'embrayage 19. L'embrayage 19 est du type embrayage vertical, dit également embrayage axial, et comprend également une roue inférieure 40 coaxiale à la roue supérieure 39. L'embrayage 19 peut prendre une position embrayée où les roues supérieure et inférieure 39, 40 peuvent tourner de manière solidaire l'une de l'autre et une position débrayée où la roue supérieure 39 est immobilisée et la roue inférieure 40 peut tourner. A cet effet, un ressort 41 maintient les roues 39, 40 solidaires l'une de l'autre par friction en position embrayée et, par la fermeture d'une pince 42 agissant sur un cône situé entre les roues 39, 40 contre l'action du ressort 41, le cône et, avec lui, la roue supérieure 39 peuvent être éloignés axialement de la roue inférieure 40 pour supprimer la friction, ce qui correspond à la position débrayée. Lors du passage de la position embrayée à la position débrayée, la denture de la roue supérieure 39 entre dans une denture 43 fixe par rapport au bâti ou coque 12 du clapet 3. Cette denture fixe 43 immobilise la roue supérieure 39 en position débrayée. Lors du passage de la position débrayée à la position embrayée, la denture de la roue supérieure 39 sort de la denture fixe 43. La denture 38 du tambour de barillet primaire 36 est suffisamment haute pour que la roue supérieure 39 engrène en permanence avec le tambour de barillet 36, quelle que soit sa position axiale. La roue inférieure 40 reste, elle, fixe axialement. La pince 42 est commandée par une roue à colonnes 44, comme cela est classique en horlogerie, mais qui est ici entraînée par un moteur électrique 45 lui-même commandé par le processeur 8. Des exemples d'embrayages verticaux pouvant convenir dans la présente invention sont décrits plus en détail dans la demande de brevet EP 2015145.

La roue inférieure 40 de l'embrayage 19 engrène avec la roue dentée du générateur électrique 22, représenté seulement partiellement à la figure 5, ainsi qu'avec une roue de remontage secondaire 46 montée solidaire autour d'un arbre de barillet secondaire 47. Un tambour de barillet secondaire 48 est monté autour de l'arbre de barillet secondaire 47 en étant indépendant en rotation par rapport à celui-ci. Le tambour de barillet secondaire 47 loge un ressort secondaire d'accumulation d'énergie en forme de spirale (non visible sur les figures) et présente une denture extérieure 49. Le ressort secondaire a son extrémité extérieure fixée à la paroi intérieure du tambour de barillet secondaire 48 et son extrémité intérieure fixée à l'arbre de barillet secondaire 47. La raideur du ressort secondaire est de préférence inférieure à celle du ressort primaire 37. Le tambour de barillet secondaire 48 est maintenu fixe en rotation par l'engrènement de sa denture 49 avec une denture 50 fixe par rapport à la coque 12 du clapet 3. L'ensemble constitué par la roue de remontage secondaire 46, l'arbre de barillet secondaire 47, le tambour de barillet secondaire 48 et le ressort secondaire forme l'accumulateur d'énergie à ressort secondaire 21. Le tambour de barillet secondaire 48 peut être fermé par un couvercle.

Le mécanisme 17 comprend par ailleurs un dispositif de détection de la tension du ressort primaire d'accumulation d'énergie 37. Ce dispositif, montré uniquement à la figure 6, comprend, à l'instar des dispositifs horlogers de détection de réserve de marche, un mécanisme à différentiel 51 coopérant en entrée avec la roue de remontage primaire 33 et le tambour de barillet primaire 36 et actionnant en sortie un organe rotatif 52 du type aiguille indicatrice dont la position angulaire est représentative de la tension du ressort 37, c'est-à-dire de la quantité d'énergie mécanique emmagasinée par ledit ressort. L'organe rotatif 52 est réalisé en une matière conductrice, telle que le cuivre. Lorsque le ressort 37 a atteint un état de tension prédéterminé, consistant en un état de tension jugé suffisant, qui peut être un état de remontage complet du ressort 37, l'organe rotatif 52 se trouve dans une position où il touche deux contacts électriques 53 et crée ainsi une boucle fermée qui est détectée par le processeur 8.

Le mécanisme 17 fonctionne de la manière suivante. Dans un état initial, l'embrayage 19 est dans sa position débrayée où la roue supérieure 39 engrène avec la denture fixe 43, ce qui bloque en rotation le tambour de barillet primaire 36, et le ressort secondaire est complètement dévidé (détendu). A chaque fois que l'utilisateur ouvre le téléphone, la roue de remontage primaire 33 est tournée par le train d'engrenages 18 dans un sens tendant à remonter le ressort primaire 37. Ce dernier accumule ainsi de l'énergie au fur et à mesure des utilisations du téléphone. Le cliquet 35 empêche la roue de remontage primaire 33 de tourner dans l'autre sens, qui tendrait à dévider le ressort primaire 37, et bloque le train d'engrenages 18 lors de la fermeture du téléphone. La bride glissante dans le tambour de barillet primaire 36 empêche une surtension du ressort primaire 37 dans le cas où le téléphone serait ouvert alors que le ressort primaire 37 serait complètement remonté. Lorsque l'état de tension prédéterminé mentionné plus haut en relation avec la figure 6 est atteint, le processeur 8 met l'embrayage 19 dans sa position embrayée où la roue supérieure 39 n'engrène plus avec la denture fixe 43, ce qui libère le tambour de barillet primaire 36 qui se met à tourner sous l'effet de la détente du ressort primaire 37. La roue inférieure 40 de l'embrayage 19, entraînée par la roue supérieure 39 elle-même entraîné par le tambour de barillet primaire 36, entraîne la roue, donc le rotor, du générateur électrique 22 ainsi que la roue de remontage secondaire 46 dans un sens tendant à remonter le ressort secondaire. Ainsi, le ressort primaire 37 se décharge en partie dans le générateur électrique 22 et en partie dans le ressort secondaire. Le ressort secondaire joue ici le rôle d'un frein permettant de ralentir le dévidage du ressort primaire 37 et de diminuer le couple transmis au générateur électrique 22.

Le dévidage du ressort primaire 37 s'arrête lorsqu'un équilibre est atteint entre la tension du ressort primaire 37 et la résistance que lui opposent le générateur électrique 22 et le ressort secondaire. A ce moment, le ressort secondaire est complètement ou partiellement remonté et le ressort primaire 37 n'est pas complètement dévidé. Le temps nécessaire pour atteindre cet équilibre est connu du processeur 8 et correspond à une temporisation prédéterminée. A l'expiration de cette temporisation, le processeur 8 remet l'embrayage 19 dans sa position débrayée pour bloquer à nouveau le tambour de barillet primaire 36. N'étant plus entraînée ni retenue par l'embrayage 19, la roue de remontage secondaire 46 tourne dans l'autre sens sous l'effet de la détente du ressort secondaire, ce qui entraîne la roue inférieure 40 de l'embrayage 19 et donc la roue du générateur électrique 22. Le ressort secondaire se décharge ainsi complètement ou quasi-complètement dans le générateur électrique 22.

Une fois le dévidage du ressort secondaire terminé et détecté au niveau du processeur 8 par l'expiration d'une deuxième temporisation prédéterminée, le processeur 8 remet l'embrayage 19 dans sa position embrayée pour que l'énergie restant dans le ressort primaire 37 soit déchargée dans le générateur électrique 22 et dans le ressort secondaire jusqu'à atteindre un nouvel équilibre. Puis le processeur 8 remet l'embrayage 19 dans sa position débrayée pour bloquer le tambour de barillet primaire 36 et décharger le ressort secondaire dans le générateur électrique 22. Ce processus peut être recommencé un certain nombre de fois jusqu'au dévidage complet ou quasi-complet du ressort primaire 37. Le nombre de répétitions de ce processus peut être prédéterminé. En variante, ce processus pourrait être répété jusqu'à ce qu'une valeur de tension du ressort primaire 37 suffisamment basse soit mesurée par le dispositif illustré à la figure 6.

Les rotations de la roue du générateur électrique 22 entraînées par le dévidage des ressorts primaire et secondaire sont transformées par le générateur électrique 22 en énergie électrique qui est fournie à la batterie 9 par l'intermédiaire successivement d'un redresseur 55, d'un amplificateur de tension 56 et du circuit de gestion de charge 10 (figure 3).

La présente invention permet ainsi d'emmagasiner beaucoup d'énergie dans le ressort primaire 37 et de la libérer progressivement de sorte à optimiser la recharge de la batterie 9, c'est-à-dire éviter qu'une bonne partie de l'énergie accumulée par le ressort primaire 37 soit perdue pour la recharge de la batterie 9 du fait de l'écrêtage du courant de charge se produisant normalement lors d'une telle recharge. Par cet effet de lissage, la présente invention permet aussi l'utilisation d'un générateur électrique 22 de faible couple, du type de ceux que l'on trouve dans certaines montres automatiques. Le fait que le ressort secondaire ait une raideur inférieure à la raideur du ressort primaire est particulièrement avantageux dans ce cas, car cela diminue le couple transmis au générateur électrique 22 lors de la phase où l'énergie de l'un des ressorts d'accumulation, à savoir le ressort secondaire, est fournie uniquement au générateur électrique 22.

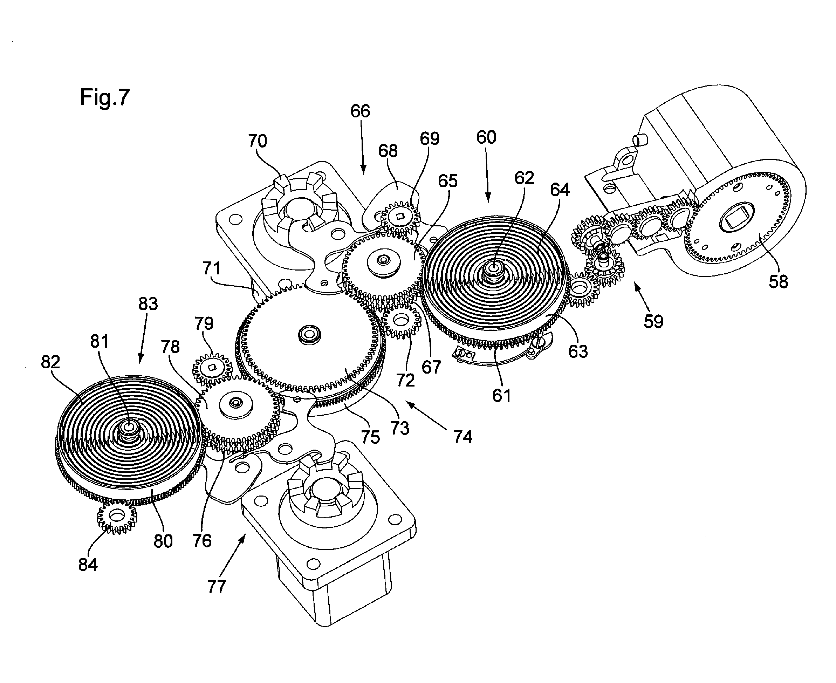

Pour augmenter encore l'effet de lissage, il est possible d'utiliser plus de deux barillets. La figure 7 montre un second mode de réalisation de l'invention utilisant trois barillets, deux générateurs électriques et deux embrayages. Plus précisément, ce second mode de réalisation comprend une roue de charnière 58, un train d'engrenages 59 et un accumulateur d'énergie à ressort primaire 60 identiques aux éléments 16, 18 et 20 du premier mode de réalisation et agencés de la même manière. L'accumulateur d'énergie à ressort primaire 60 comprend ainsi une roue de remontage primaire 61 montée solidaire autour d'un arbre de barillet primaire 62 autour duquel est monté libre en rotation un tambour de barillet primaire 63 logeant un ressort de barillet primaire 64.

Par sa denture extérieure, le tambour de barillet primaire 63 engrène avec une roue supérieure 65 d'un mobile d'un embrayage primaire 66, mobile qui comprend en outre une roue inférieure 67 coaxiale à la roue supérieure 65. L'embrayage primaire 66 diffère de l'embrayage 19 du premier mode de réalisation en ce que les roues 65, 67 sont en permanence solidaires en rotation. La roue supérieure 65 peut cependant se déplacer axialement par rapport à la roue inférieure 67. Ceci est réalisé par exemple par des cannelures pratiquées sur l'arbre commun des roues 65, 67 et coopérant avec des ergots de la roue supérieure 65 permettant à cette dernière de glisser le long de l'arbre tout en restant solidaire en rotation dudit arbre. Le déplacement axial de la roue supérieure 65 peut être actionné par une pince 68 agissant sur un cône situé axialement entre les roues 65, 67. Une fermeture de la pince 68 déplace le cône et, avec lui, la roue supérieure 65 vers le haut à l'encontre de l'action d'un ressort et fait entrer la denture de la roue supérieure 65 dans une denture 69 fixe par rapport à la coque 12 du clapet 3. Une ouverture de la pince 68 libère la roue supérieure 65 à l'action dudit ressort, ce qui fait retomber la roue supérieure 65 et désengage cette dernière de la denture fixe 69. Les mouvements de la pince 68 sont commandés par une roue à colonnes 70 entraînée par un moteur électrique 71 lui-même commandé par le processeur 8. La denture du tambour de barillet primaire 63 est suffisamment haute pour que la roue supérieure 65 engrène en permanence avec le tambour de barillet 63, quelle que soit sa position axiale. La roue inférieure 67 reste, elle, fixe axialement.

La roue inférieure 67 engrène avec la roue dentée d'un générateur électrique primaire 72, représenté partiellement sur la figure 7, ainsi qu'avec une roue de remontage secondaire 73 d'un accumulateur d'énergie à ressort secondaire 74 identique à l'accumulateur d'énergie à ressort secondaire 21 du premier mode de réalisation. L'accumulateur d'énergie à ressort secondaire 74 comprend ainsi, outre la roue de remontage secondaire 73, un tambour de barillet secondaire 75 logeant un ressort secondaire d'accumulation d'énergie (non visible sur le dessin). Le tambour de barillet secondaire 75 engrène avec la roue inférieure 76 d'un mobile d'un embrayage secondaire 77, mobile qui comprend en outre une roue supérieure 78 coaxiale à la roue inférieure 76. L'embrayage secondaire 77 est identique à l'embrayage primaire 66. Ainsi, les roues supérieure et inférieure 78, 76 sont solidaires en rotation et dans une position de l'embrayage 77 ces deux roues 78, 76 peuvent tourner alors que dans une autre position ces deux roues 78, 76 sont bloquées en rotation par l'engrènement de la roue supérieure 78 avec une denture 79 fixe par rapport à la coque 12 du clapet 3. Lorsqu'elle est dans sa position où elle n'engrène pas avec la denture fixe 79, la roue supérieure 78 engrène avec un tambour de barillet tertiaire 80 monté rotatif autour d'un axe 81 fixe par rapport à la coque 12 du clapet 3. Le tambour de barillet tertiaire 80 loge un ressort tertiaire d'accumulation d'énergie 82 en forme de spirale dont l'extrémité intérieure est fixée à l'axe 81 et l'extrémité extérieure est fixée à la paroi intérieure du tambour de barillet tertiaire 80. Le tambour de barillet tertiaire 80, l'axe 81 et le ressort tertiaire 82 forment un accumulateur d'énergie à ressort tertiaire 83. Le tambour de barillet tertiaire 80 engrène avec la roue dentée d'un générateur électrique secondaire 84, représenté partiellement sur le dessin.

De préférence, la raideur du ressort tertiaire 82 est inférieure à la raideur du ressort secondaire, qui est elle-même inférieure à la raideur du ressort primaire 64.

Comme dans le premier mode de réalisation, le mécanisme de recharge manuelle du téléphone portable selon le second mode de réalisation de l'invention comprend en outre un dispositif tel que celui illustré à la figure 6 pour détecter la tension du ressort primaire d'accumulation d'énergie 64.

Le mécanisme illustré à la figure 7 fonctionne de la manière suivante. Dans un état initial, les embrayages primaire et secondaire 66, 77 sont dans une position où la roue supérieure 65 engrène avec la denture fixe 69 et la roue supérieure 78 engrène avec la denture fixe 79, ce qui maintient immobiles les tambours de barillet primaire et secondaire 63, 75 et libre le tambour de barillet tertiaire 80. A chaque fois que l'utilisateur ouvre le téléphone, la roue de remontage primaire 61 est tournée dans un sens tendant à remonter le ressort primaire 64. Ce dernier accumule ainsi de l'énergie au fur et à mesure des utilisations du téléphone. Lorsque l'état de tension prédéterminé mentionné en relation avec la figure 6 est atteint, le processeur 8 met l'embrayage primaire 66 dans sa position où la roue supérieure 65 n'engrène plus avec la denture fixe 69, ce qui libère le tambour de barillet primaire 63 qui se met à tourner sous l'effet de la détente du ressort primaire 64. Le mobile 65, 67, entraîné par le tambour de barillet primaire 63, entraîne en rotation la roue dentée, donc le rotor, du générateur électrique primaire 72 ainsi que la roue de remontage secondaire 73 dans un sens tendant à remonter le ressort secondaire, le tambour de barillet secondaire 75 restant, lui, immobile. Le ressort primaire 64 se décharge ainsi en partie dans le générateur électrique primaire 72 et en partie dans le ressort secondaire.

Lorsque l'équilibre est atteint, les embrayages primaire et secondaire 66, 77 changent tous les deux de position, pour faire engrener la roue supérieure 65 avec la denture fixe 69, dégager la roue supérieure 78 de la denture fixe 79 et faire engrener la roue supérieure 78 avec le tambour de barillet tertiaire 80. Ceci bloque en rotation le tambour de barillet primaire 63 (de manière à conserver l'énergie restante) et la roue de remontage secondaire 73 et libère le tambour de barillet secondaire 75 qui se met alors à tourner sous l'effet de la détente du ressort secondaire, entraînant en cascade le mobile 76, 78, le tambour de barillet tertiaire 80 (dans un sens tendant à remonter le ressort tertiaire 82) et la roue dentée, donc le rotor, du générateur électrique secondaire 84. Le ressort secondaire se décharge ainsi en partie dans le ressort tertiaire 82 et en partie dans le générateur électrique secondaire 84.

Lorsque l'équilibre est atteint, les embrayages primaire et secondaire 66, 77 rechangent tous les deux de position pour permettre au ressort primaire 64 de se décharger dans le générateur électrique primaire 72 et dans le ressort secondaire et pour libérer le tambour de barillet tertiaire 80 de sorte à décharger le ressort tertiaire 82 dans le générateur électrique secondaire 84.

Ce processus peut être répété le nombre de fois nécessaire pour la décharge complète ou quasi-complète du ressort primaire 64.

L'homme du métier comprendra que la présente invention n'est pas limitée à un nombre particulier de barillets ou accumulateurs d'énergie à ressort. Dans d'autres modes de réalisation, plus de trois accumulateurs d'énergie à ressort en cascade pourraient en effet être utilisés.

Dans encore un autre mode de réalisation, on pourrait supprimer l'accumulateur d'énergie à ressort tertiaire 83 du second mode de réalisation et faire engrener la roue du générateur électrique secondaire 84 avec la roue supérieure 78 de l'embrayage secondaire 77 pour que, après avoir été remonté par la décharge du ressort primaire 64, le ressort secondaire se décharge complètement ou quasi-complètement dans le générateur électrique secondaire 84.

Dans l'exemple décrit précédemment, le mécanisme de remontage est actionné lors de l'ouverture du clapet 3 ; dans une variante ledit mécanisme pourrait être actionné lors de la fermeture du clapet 3 contre la base 2.

La présente invention n'est pas limitée à un type d'appareil électronique portable particulier. Elle pourrait en effet s'appliquer à d'autres appareils électroniques portables qu'un téléphone portable, par exemple un assistant numérique personnel (PDA) ou un ordinateur portable. La présente invention pourrait aussi s'appliquer à des appareils électroniques portables comprenant une source d'énergie autre qu'une batterie d'accumulateurs, par exemple un simple élément accumulateur ou un condensateur de forte capacité.

Par ailleurs, les deux parties mobiles dont les mouvements relatifs permettent le remontage du ressort primaire pourraient être le corps de l'appareil et un organe manuel spécifique tel qu'une manivelle, respectivement.

En variante, l'appareil pourrait être en deux parties coulissantes l'une par rapport à l'autre et une crémaillère portée par l'une des parties pourrait coopérer avec une roue portée par l'autre partie pour remonter le ressort primaire par l'intermédiaire d'un train d'engrenage.

## Revendications

1. Appareil électronique portable comprenant des première et deuxième parties (2, 3) mobiles l'une par rapport à l'autre, une source d'énergie rechargeable (9), au moins un générateur électrique (22 ; 72, 84) pour recharger la source d'énergie (9) et un mécanisme (17) pour actionner le ou les générateurs électriques (22 ; 72, 84) en utilisant l'énergie produite par des mouvements relatifs des première et deuxième parties (2, 3), **caractérisé en ce que** ledit mécanisme (17) comprend :
- un premier accumulateur d'énergie à ressort (20 ; 60) pour emmagasiner ladite énergie produite par les mouvements relatifs,
- un deuxième accumulateur d'énergie à ressort (21 ; 74), et
- des moyens (8, 51-53, 19 ; 66, 77) pour successivement
a) libérer de l'énergie emmagasinée dans le premier accumulateur d'énergie à ressort (20 ; 60) et la fournir en partie au générateur électrique (22) ou à un premier (72) des générateurs électriques (72, 84) et en partie au deuxième accumulateur d'énergie à ressort (21 ; 74), et
b) libérer de l'énergie emmagasinée dans le deuxième accumulateur d'énergie à ressort (21 ; 74) et la fournir, en partie au moins, au générateur électrique (22) ou à un deuxième (84) des générateurs électriques (72, 84).

2. Appareil électronique portable selon la revendication 1, **caractérisé en ce que** lesdits moyens (8, 51-53, 19 ; 66, 77) sont adaptés pour répéter la succession des étapes a) et b) jusqu'à ce que le premier accumulateur d'énergie à ressort (20 ; 60) soit sensiblement complètement déchargé.

3. Appareil électronique portable selon la revendication 1 ou 2, **caractérisé en ce que** la force du deuxième accumulateur d'énergie à ressort (21 ; 74) est inférieure à la force du premier accumulateur d'énergie à ressort (20 ; 60).

4. Appareil électronique portable selon l'une quelconque des revendications 1 à 3, **caractérisé en ce que** ledit mécanisme comprend en outre un troisième accumulateur d'énergie à ressort (83) agencé pour recevoir en partie l'énergie libérée du deuxième accumulateur d'énergie à ressort (74), et **en ce que** lesdits moyens (8, 51-53 ; 66, 77) sont adaptés pour libérer de l'énergie emmagasinée dans ce troisième accumulateur d'énergie à ressort (83) et la fournir, en partie au moins, audit deuxième (84) des générateurs électriques (72, 84).

5. Appareil électronique portable selon la revendication 4, **caractérisé en ce que** la force du troisième accumulateur d'énergie à ressort (83) est inférieure à la force du deuxième accumulateur d'énergie à ressort (74).

6. Appareil électronique portable selon l'une quelconque des revendications 1 à 5, **caractérisé en ce que** lesdits moyens (8, 51-53, 19 ; 66, 77) comprennent des moyens d'embrayage (19 ; 66, 77) pour sélectivement bloquer ou libérer les accumulateurs d'énergie à ressort (20, 21 ; 60, 74, 83).

7. Appareil électronique portable selon l'une quelconque des revendications 1 à 6, **caractérisé en ce que** les accumulateurs d'énergie à ressort (20, 21 ; 60, 74, 83) comprennent chacun un tambour (36, 48 ; 63, 75, 80) logeant un ressort d'accumulation d'énergie en spirale (37 ; 64, 82).

8. Appareil électronique portable selon l'une quelconque des revendications 1 à 7, **caractérisé en ce que** les première et deuxième parties mobiles (2, 3) comprennent chacune des éléments participant au fonctionnement normal de l'appareil, et **en ce que** ledit mécanisme (17), avec le ou les générateurs électriques (22 ; 72, 84), et la source d'énergie (9) sont chacun situés dans l'une desdites première et deuxième parties mobiles (2, 3).

9. Appareil électronique portable selon l'une quelconque des revendications 1 à 8, **caractérisé en ce que** les première et deuxièmes parties mobiles (2, 3) sont articulées l'une à l'autre par une charnière (4).

10. Appareil électronique portable selon l'une quelconque des revendications 1 à 9, **caractérisé en ce qu'**il consiste en un téléphone portable.
